# EUROPÄISCHE PATENTSCHRIFT

(11) **EP 0 746 443 B1**
(45) Veröffentlichungstag und Bekanntmachung des Hinweises auf die Patenterteilung: **29.10.1997**
(21) Anmeldenummer: 95911250.9
(22) Anmeldetag: 22.02.1995
(51) Int. Cl.: B23Q 17/24, B25B 11/00

(54) **WERKSTÜCKAUFLAGE**
WORK SUPPORT
SUPPORT DE PIECE A USINER

(30) Priorität: 26.02.1994 DE 9403242 U
(43) Veröffentlichungstag der Anmeldung: 11.12.1996
(73) Patentinhaber: IMA-NORTE Maschinenfabriken Klessmann GmbH, 33334 Gütersloh (DE)
(72) Erfinder: REDEKER, Günter, 32351 Stemmwede/Levern (DE)
(74) Vertreter: Patentanwälte Dipl.-Ing. Bodo Thielking Dipl.-Ing. Otto Elbertzhagen
(86) Internationale Anmeldenummer: EP9500635
(87) Internationale Veröffentlichungsnummer: WO9523047

(56) Entgegenhaltungen:
- DE-C- 3 303 878
- DE-U- 9 402 252
- US-A- 5 135 120

## Beschreibung

### TECHNISCHES GEBIET

Die Erfindung bezieht sich auf eine Werkstückauflage für eine programmgesteuerte Maschine zum spangebenden Bearbeiten von plattenförmigen Werkstücken insbesondere aus Holz oder Holzaustauschstoffen mit in Richtung einer der Bearbeitungsachsen, wie der X-Achse, von Hand quer zu ihrer Längsachse verstellbaren Auflagerschienen, und mit darauf in deren Längsrichtung, wie in Richtung der zweiten Bearbeitungsachse, der Y-Achse, von Hand positionierbaren Saugspannern.

### STAND DER TECHNIK

Die Positionierung der Saugspanner bei einer Werkstückauflage der vorgenannten Art richtet sich nach dem Format und der Konfiguration der zu bearbeitenden, plattenförmigen Werkstücke, die insbesondere auch entlang ihrer Ränder, also rundum, mittels spangebender, rotierender Werkzeuge anfahrbar sein müssen, wobei die Werkstückauflage, insbesondere die auf den Auflagerschienen nach oben vorstehenden Saugspanner nicht beschädigt werden dürfen. Man justiert deshalb die Auflagerschienen und die darauf anzuordnenden Saugspanner so, daß darüber die Werkstücke entlang ihrer umlaufenden Kanten vorkragen, damit sie entlang ihres Randes von dem Werkzeug umfahren werden können. Auch an denjenigen Stellen, an denen die Werkstücke beispielsweise durchbohrt werden, was mit einem Austritt des Bohrwerkzeuges an der Unterseite der Werkstücke, also an der Spannseite, verbunden ist, muß man durch entsprechende Positionierung die Anordnung eines Saugspanners vermeiden.

Da die Positionierung der Auflagerschienen ebenso wie die der Saugspanner auf den Auflagerschienen von Hand erfolgt, bedarf es besonderer Anweisungen für die Bedienungsperson, wo abhängig von der Größe und der Konfiguration der einzelnen Werkstücke die Saugspanner zu setzen sind. Trotzdem kommt es bei der Positionierung der Saugspanner immer wieder zu Ungenauigkeiten oder Fehlern, die in der Regel dazu führen, daß das spangebende Bearbeitungswerkzeug zumindest in einen der Saugspanner hineinfährt und diesen beschädigt.

### DIE ERFINDUNG

Der Erfindung liegt deshalb die Aufgabe zugrunde, eine Werkstückauflage der gattungsbildenden Art zu schaffen, bei der die Koordinaten für die Positionierung der Saugspanner, was die Ausrichtung der Auflagerschienen mit einschließt, durch optische Hilfsmittel vorgegeben wird.

Diese Aufgabe wird bei einer Werkstückauflage der gattungsgemäßen Art nach der Erfindung dadurch gelöst, daß entlang des Verstellweges der Auflagerschienen einerseits sowie entlang der Längsseite jeder Auflagerschiene andererseits je ein Leuchtband angeordnet ist, an dem die einzurichtende Position jeder Auflagerschiene und der darauf anzuordnenden Saugspanner optisch anzeigbar ist.

Für die Erfindung ist wesentlich, daß das entlang des Verstellweges der Auflagerschienen vorgesehene Leuchtband und das an jeder Auflagerschiene angeordnete Leuchtband ein Koordinatensystem aufzeigen, welches für jeden anzubringenden Saugspanner zum einen die Koordinate für die Auflagerschiene und zum anderen die Koordinate für die Positionierung des betreffenden Saugspanners auf der jeweiligen Auflagerschiene sichtbar macht. Danach ist es lediglich erforderlich, die Auflagerschienen bis zu der optisch markierten Stelle an ihrem Verfahrweg zu verschieben und den jeweiligen Saugspanner an der optisch angezeigten Stelle der betreffenden Auflagerschiene aufzusetzen. Aus der Programmsteuerung der Maschine können für jede Werkstückart und für jede Bearbeitungsart die entsprechenden Positionierdaten abgerufen werden, die sich ohne weiteres aus dem vorgegebenen Bearbeitungsweg der Werkzeuge ermitteln lassen und gegebenenfalls in einem Zusatzprogramm mitgeliefert werden können.

Vorteilhaft bestehen die Leuchtbänder jeweils aus einer Reihe von punktförmigen Lichtquellen, bei denen es sich in bevorzugter Ausführung um Leuchtdioden handelt. Man kann die Dichte der punktförmigen Lichtquellen entlang der Leuchtbänder leicht so wählen, daß in dem jeweils anzuzeigenden Abschnitt eine Mehrzahl dieser Lichtquellen aufleuchtet. Die Breite dieser aufleuchtenden Abschnitte entspricht zum einen entlang dem Verfahrweg der Auflagerschienen deren Breite und entlang dem Positionierweg jeder einzelnen Auflagerschiene der Breite eines Saugspanners in Längsrichtung der Auflagerschiene. In anderer Ausführung kann die Positionieranzeige der Leuchtbänder auch über Abschnitte hinweg erfolgen, die der jeweiligen Kantenlänge der Saugfelder entspricht, die an der Oberseite der Saugspanner zum Fixieren der Werkstücke angeordnet sind. Hierbei kann auch noch durch Variation der Leuchtstärke zwischen der Anzeige der Leuchtfelder und der daneben liegenden Leerfelder der Saugspanner unterschieden werden.

Damit eine leichte Zuordnung zwischen der betreffenden Leuchtwandanzeige und den Auflagerschienen möglich ist, wird vorteilhaft das Leuchtband für die Auflagerschienen unmittelbar an den miteinander fluchtenden, von der Bedienseite abliegenden Stirnseiten der Auflagerschiene angeordnet.

Die Bedienung der erfindungsgemäßen Werkstückauflage ist dann besonders sinnfällig, wenn das Lichtband längs des Verfahrweges der Auflagerschienen und die Lichtbänder an den Auflagerschienen selbst rechtwinklig zueinander stehen, was den üblicherweise rechtwinklig aufeinander stehenden Bearbeitungsachsen in der Tischebene einer Werkzeugmaschine, wie der X-Achse und der Y-Achse, entspricht.

### Kurzbeschreibung der Zeichnungsabbildung

Die Erfindung wird nachfolgend anhand der Zeichnung an einem Ausführungsbeispiel noch näher erläutert. Dabei zeigen:
- Fig. 1: eine schematische Draufsicht auf eine Werkstückauflage mit verstellbaren Auflagerschienen und darauf positionierbaren Saugspannern und
- Fig. 2: in vergrößerter Darstellung die Draufsicht auf eine der Auflagerschienen einer Werkstückauflage nach Figur 1 mit einer Mehrzahl darauf aufgesetzter Saugspanner in verschiedenen Ausführungen bzw. Anordnungen.

### BESTER WEG ZUR AUSFÜHRUNG DER ERFINDUNG

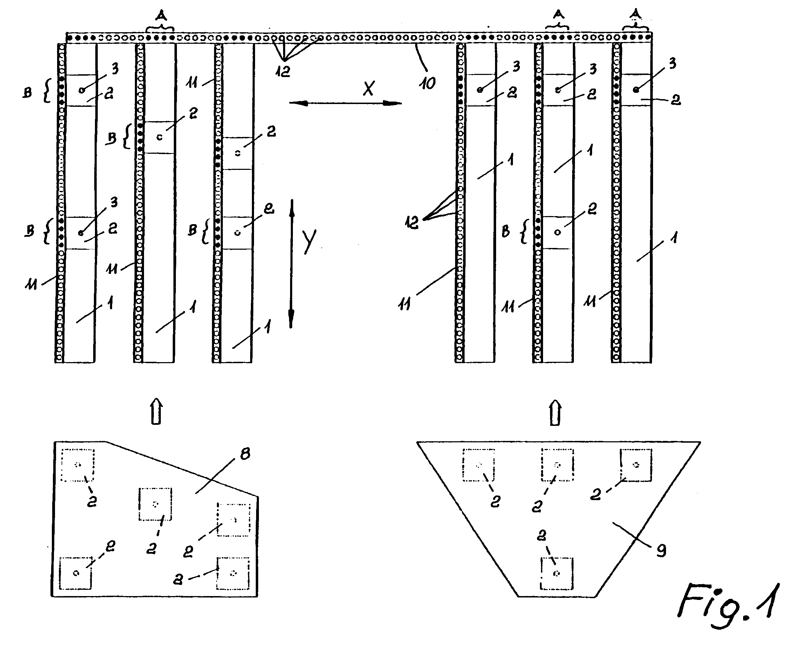

Figur 1 zeigt im einzelnen eine Mehrzahl von miteinander parallelen Auflagerschienen 1 einer Werkstückauflage für eine programmgesteuerte Maschine zum spangebenden Bearbeiten von plattenförmigen Werkstücken. In Richtung einer der Bearbeitungsachsen der Maschine, wie hier der X-Achse, können die einzelnen Werkstückauflagen 1 je für sich von Hand hin- und herverschoben werden, wozu sie auf einer in der Zeichnung nicht näher dargestellten Führung aufgelagert sind. Auf jeder der Auflagerschienen 1 kann eine Mehrzahl von Saugspannern 2 positioniert werden, und zwar an beliebiger Stelle in deren Längsrichtung, die sich mit der Richtung der zweiten Bearbeitungsachse der Maschine, der Y-Achse, deckt. Die Saugspanner 2 haben oberseitige Saugöffnungen 3 zum Spannen der betreffenden Werkstücke mittels Unterdruck.

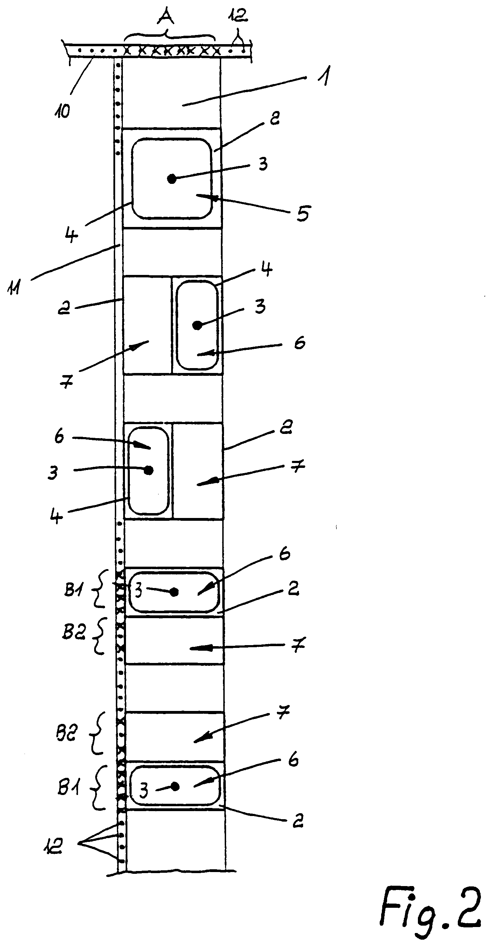

Wie ergänzend dazu Figur 2 verdeutlicht, haben die Saugspanner 2 an ihrer Oberseite eine umlaufende Dichtung 4, die jeweils ein volles Saugfeld 5 oder ein halbseitiges Saugfeld 6 einschließt, in das die Saugöffnung 3 mündet. Die Saugspanner 2 haben eine quadratische Grundform, über die hinweg sich das volle Saugfeld 5 annähernd erstreckt. Das halbseitige Saugfeld 6 hingegen belegt im wesentlichen nur die halbe Oberseite der in der Grundform quadratischen Saugspanner 2 und ist entsprechend rechteckig. Ein Saugspanner 2 mit einem halbseitigen Saugfeld 6 kann mit dessen Längsrichtung entweder in Längsrichtung oder in Querrichtung der Auflagerschiene 1 aufgesetzt werden, wobei zusätzlich noch eine rechte oder linke Position oder eine vordere und eine hintere Position des Saugfeldes 6 möglich ist, wie es bei den entsprechenden vier Saugspannern 2 in Figur 2 veranschaulicht ist. Neben dem halbseitigen Saugfeld 6 findet sich entsprechend an der Oberseite der betreffenden Saugspanner 2 ein Leerfeld 7, welches die zweite halbe Seite des jeweiligen Saugspanners 2 überdeckt.

In Figur 1 sind vor der Werkstückauflage zwei plattenförmige Werkstücke 8 und 9 von unterschiedlicher Größe und Umrißgestalt wiedergegeben. Die spangebende Bearbeitung dieser beiden Werkstücke 8 und 9 entlang deren Umfangskanten sowie die darin gegebenenfalls anzubringenden Bohrungen, erfordern eine unterschiedliche Positionierung der Saugspanner 2 wie sie in der Darstellung unterhalb der Werkstücke 8 und 9 durch gepunktete Linien angedeutet ist und wie sie der tatsächlichen Positionierung der Saugspanner 2 und der Ausrichtung der Auflagerschienen 1 entspricht, wie sie bei der Werkstückauflage selbst vorgesehen ist, auf die die beiden Werkstücke 8 und 9 durch Verschieben in Y-Richtung aufgegeben werden. Für die entsprechende Rüstung der Werkstückauflage durch Verschieben der Auflagerschienen 1 und Positionieren der Saugspanner 2 gibt es als sogenannte Rüsthilfe eine optische Anzeige, die wie folgt aufgebaut ist und funktioniert:

Entlang des Verfahrweges der Auflagerschienen 1 in der X-Richtung befindet sich ein erstes Leuchtband 10, das aus einer Vielzahl von in einer Reihe hintereinander angeordneten Leuchtdioden 12 besteht. Das Leuchtband 10 erstreckt sich unmittelbar entlang der rückwärtigen Stirnseiten der Auflagerschienen 1, die an der von der Bedienseite der Werkstückauflage abgelegenen Enden der Auflagerschienen 1 in einer gemeinsamen, sich in Richtung der X-Achse erstreckenden Vertikalebene liegen. Die einzelne Lichtpunkte bildenden Leuchtdioden 12 werden jeweils dort zum Aufleuchten gebracht, wo die einzelnen Auflagerschienen 1 in der X-Richtung positioniert werden sollen. Entsprechend leuchtet ein Abschnitt A dieser Leuchtdioden 12 des ersten Leuchtbandes 10 auf, der sich über die Breite jeweils einer der Auflagerschienen 1 erstreckt. Die einzelnen Stellen der Abschnitte A, die zumindest vorübergehend bei der Justierung der Auflagerschienen 1 aufleuchten sollen, werden aus der Programmsteuerung der Maschine abgerufen und stellen die X-Koordinaten für die Positionierung der Auflagerschienen 1 in Abhängigkeit von dem jeweils zu bearbeitenden Werkstück 8 oder 9 dar.

Für die Positionierung der Saugspanner 2 in Längsrichtung der Auflagerschienen 1 sind weitere Leuchtbänder 11 vorhanden, von denen sich jeweils eines entlang einer Längsseite der jeweiligen Auflagerschiene 1 erstreckt, womit die Y-Koordinate für die Saugspanner 2 jeder einzelnen Auflagerschiene 1 optisch angezeigt werden kann. In gleicher Weise wie das erste Leuchtband 10 ist das zweite Leuchtband 11 aus einer Reihe von Leuchtdioden 12 gebildet, die bei Positionieranzeige entlang eines Abschnittes B aufleuchten, welcher der Breite der Saugspanner 2 jeweils in Längsrichtung der Auflagerschiene 1 entspricht.

Figur 2 macht zusätzlich noch eine Variation der optischen Anzeige für diejenigen Saugspanner 2 deutlich, die an ihrer Oberseite nur ein halbseitiges Saugfeld 6 haben. Hier wird die Y-Koordinate der einzunehmenden Position des halbseitigen Saugfeldes 6 des Saugspanners 2 durch einen Abschnitt B1 auf dem Leuchtband 11 mit höherer Leuchtstärke angezeigt, während für das Leerfeld 7 neben dem halbseitigen Saugfeld 6 an der Oberseite des Saugspanners 2 ein schwächer leuchtender Abschnitt B2 des Leuchtbandes 11 vorgesehen ist, womit durch die Summe der beiden aneinander anschließenden Leuchtabschnitte B1 und B2 die genaue Lage des gesamten Saugspanners 2 erkennbar ist. Das trifft für solche Saugspanner 2 zu, bei denen das rechteckige Saugfeld 6 mit seiner Längsachse in Querrichtung der jeweiligen Auflagerschiene 1 liegt. In analoger Weise kann auch die Positionierung der halbseitigen Saugfelder 6 derjenigen Saugspanner 2 optisch angezeigt werden, die mit der Längsrichtung ihrer rechteckigen Saugfelder 6 parallel zur Längserstreckung der betreffenden Auflagerschiene 1 angeordnet werden. Hierbei finden sich dann die entsprechenden Leuchtabschnitte unterschiedlicher Leuchtstärke beim ersten Lichtband 10, welches rückwärtig entlang des Verfahrweges der Auflagerschienen 1 verläuft. Es versteht sich hierbei, daß die punktförmigen Leuchtdioden 12 der beiden Leuchtbänder 10 und 11 jeweils in einer solch dichten Folge hintereinander angeordnet werden, daß immer eine Mehr- oder Vielzahl dieser Leuchtdioden 12 der Kantenlänge der quadratischen Saugfelder 5 oder der Kantenlänge der rechteckigen Saugfelder 6 der Saugspanner 2 zugeordnet ist. So kann die unterschiedliche Leuchtintensität zur Signalisierung der Lage der halbseitigen, rechteckigen Saugfelder 6 dadurch erzielt werden, daß man bei dem einen aufleuchtenden Abschnitt B1 alle Leuchtdioden und bei dem zweiten Abschnitt B2 nur jede zweite Leuchtdiode brennen läßt.

## Patentansprüche

1. Werkstückauflage für eine programmgesteuerte Maschine zum spangebenden Bearbeiten von plattenförmigen Werkstücken insbesondere aus Holz oder aus Holzaustauschstoffen mit in Richtung einer der Bearbeitungsachsen, wie der X-Achse, von Hand quer zu ihrer Längsachse verstellbaren Auflagerschienen (1), und mit darauf in deren Längsrichtung, wie in Richtung der zweiten Bearbeitungsachse, der Y-Achse, von Hand positionierbaren Saugspannern (2),
dadurch gekennzeichnet,
daß entlang des Verstellweges der Auflagerschienen (1) einerseits sowie entlang der Längsseite jeder Auflagerschiene (1) andererseits je ein Leuchtband (10, 11) angeordnet ist, an denen die einzurichtende Position jeder Auflagerschiene (1) und der darauf anzuordnenden Saugspanner (2) optisch anzeigbar ist.

2. Werkstückauflage nach Anspruch 1,
dadurch gekennzeichnet,
daß die Leuchtbänder (10, 11) jeweils aus einer Reihe von punktförmigen Lichtquellen (12) bestehen.

3. Werkstückauflage nach Anspruch 2,
dadurch gekennzeichnet,
daß die Lichtquellen (12) Leuchtdioden sind.

4. Werkstückauflage nach einem der Ansprüche 1 bis 3,
dadurch gekennzeichnet,
daß die Positionieranzeige der Leuchtbänder (10, 11) durch Aufleuchten an der betreffenden Stelle entlang eines Abschnittes (A, B) erfolgt, welcher der Breite der Auflagerschienen (1) bzw. der Breite eines der Saugspanner (2) in Längsrichtung der betreffenden Auflagerschiene (1) entspricht.

5. Werkstückauflage nach einem der Ansprüche 1 bis 3,
dadurch gekennzeichnet,
daß die Saugspanner (2) eine quadratische Grundform haben und entweder sich annähernd über ihre gesamte quadratische Grundform erstreckende Saugfelder (5) oder nur über eine Halbseite dieser Grundform in Gestalt eines Rechtecks sich erstreckende Saugfelder (6) aufweisen, wobei die Saugspanner (2) mit den halbseitigen Saugfeldern (6) mit deren Längsrichtung längs oder quer auf die Auflagerschienen (1) aufsetzbar sind und die Positionieranzeige der Leuchtbänder (10, 11) auf die jeweilige Anordnung des halbseitigen Saugfeldes (6) der betreffenden Saugspanner (2) abgestimmt ist.

6. Werkstückauflage nach Anspruch 4 oder 5,
dadurch gekennzeichnet,
daß bei punktförmigen Lichtquellen (12) der Leuchtbänder (10, 11) pro anzuzeigendem Positionierabschnitt (A, B, B1, B2) für die Auflagerschienen (1), die Saugspanner (2) oder deren halbseitige Saugfelder (6) jeweils eine Mehrzahl von Lichtquellen (12) vorgesehen ist.

7. Werkstückauflage nach Anspruch 5 oder 6,
dadurch gekennzeichnet,
daß bei den Saugspannern (2) mit den halbseitigen Saugfeldern (6) die Position dieser Saugfelder (6) mit erhöhter Leuchtstärke und die der daneben liegenden Leerfelder (7) an der Oberseite der Saugspanner (2) mit dagegen verminderter Leuchtstärke anzeigbar ist.

8. Werkstückauflage nach Anspruch 7,
dadurch gekennzeichnet,
daß bei punktförmigen Lichtquellen (12) der Leuchtbänder (10, 11) die erhöhte Leuchtstärke in dem betreffenden Abschnitt (B1) durch Aufleuchten jeder Lichtquelle (12) dieses Abschnittes (B1) und die verminderte Leuchtstärke in dem hierzu gehörenden Abschnitt (B2) durch Aufleuchten jeder zweiten Lichtquelle (12) dieses Abschnittes (B2) erzielt ist.

## Claims

1. Workpiece support for program-controlled machine for stock-removal finishing of plate-like workpieces, more particularly of wood or wood substitutes with bearing rails (1) displaceable manually across the longitudinal axis in the direction of one of the finishing axes, such as X-axis, and with suction clamps (2) which can be positioned manually therein in the longitudinal direction such as in the direction of the second finishing axis, the Y-axis,
characterised in that a light strip (10,11) is mounted along the displacement path of the bearing rails (1) on one side and along the long side of each bearing rail (1) on the other side whereby the position to be set of each bearing rail (1) and the suction clamp mounted thereon can be optically displayed on the light strip.

2. Workpiece support according to claim 1 characterised in that the light strips (10,11) each consist of a row of spot-like light sources (12).

3. Workpiece support according to claim 2 characterised in that the light sources (12) are light diodes.

4. Workpiece support according to one of claims 1 to 3 characterised in that the position display on the light strips (10,11) is reached by illumination at the relevant place along a section (A,B) which corresponds to the width of the bearing rails (1) or to the width of one of the suction clamps (2) in the longitudinal direction of the relevant bearing rail (1).

5. Workpiece according to one of claims 1 to 3 characterised in that the suction clamps (2) have a square outline and also have either suction fields (5) extending approximately over their entire square outline or have suction fields (6) extending only over half this outline in the form of a rectangle whereby the suction clamps (2) can be set with the half-side suction fields (6) with their longitudinal direction lengthwise or crosswise onto the bearing rails (1) and the position display of the light strips (10,11) conforms with the relevant arrangement of the half-side suction field (6) of the relevant suction clamp (2).

6. Workpiece support according to claim 4 or 5 characterised in that with spot-like light sources (12) on the light strips (10,11) a number of light sources (12) is provided for each positioning section (A,B, B1, B2) to be indicated for the bearing rails (1), suction clamps (2) or their half-side suction fields (6).

7. Workpiece support according to claim 5 or 6 characterised in that with suction clamps (2) with half-side suction fields (6) the position of these fields (6) can be indicated with increased light intensity and the position of the empty fields (7) adjoining same on the top of the suction clamps can be shown with reduced light intensity.

8. Workpiece support according to claim 7 characterised in that with spot-like light sources (12) on the light strips (10,11) the increased light intensity can be achieved in the relevant section (B1) by the lighting up of each light source (12) of this section (B1) and the reduced light intensity in the section (B2) concerned here can be achieved by the lighting up of each second light source (12) of this section (B2).

## Revendications

1. Support de pièces à usiner pour une machine à commande par programme traitant par enlèvement de copeaux des pièces à usiner en forme de plaques, notamment des pièces en bois ou en matières remplaçant le bois, lequel support présente des rails de support (1) réglables, manuellement, dans le sens de l'un des axe de travail, qui est ici l'axe X, transversalement par rapport à leur axe longitudinal, et des dispositifs de serrage par aspiration (2) qui peuvent être positionnés, manuellement, dans leur sens longitudinal de même que dans le sens du deuxième axe de travail, qui est ici l'axe Y,
caractérisé en ce que
le long de la voie de réglage des rails de support (1), d'une part, ainsi que le long du côté longitudinal de chaque rail de support (1), d'autre part, une bande lumineuse (10, 10) est disposée, laquelle indique optiquement la position d'ajustement de chaque rail de support (1) et du dispositif de serrage par aspiration (2) à installer au-dessus.

2. Support de pièces à usiner selon la revendication 1,
caractérisé en ce que
les bandes lumineuses (10, 11) consistent chacune en une rangée de sources de lumière (12) ponctuelles.

3. Support de pièces à usiner selon la revendication 2,
caractérisé en ce que
les sources de lumière (12) sont des diodes luminescentes.

4. Support de pièces à usiner selon l'une des revendications 1 à 3,
caractérisé en ce que
les bandes lumineuses (10, 11) indiquent la position en s'allumant à l'endroit concerné, le long d'une zone (A, B) qui correspond à la largeur du rail de support (1) resp. à la largeur de l'un des dispositifs de serrage par aspiration (2) dans le sens longitudinal du rail de support (1) concerné.

5. Support de pièces à usiner selon l'une des revendications 1 à 3,
caractérisé en ce que
les dispositifs de serrage par aspiration (2) ont une forme fondamentale carrée et présentent des champs d'aspiration (5) qui couvrent soit approximativement la totalité de cette surface fondamentale carrée soit des champs d' aspiration (6) qui couvrent seulement la moitié de cette surface fondamentale et forment ainsi chacun un rectangle, les dispositifs de serrage par aspiration (2) à champ d'aspiration (6) rectangulaire pouvant être disposés de sorte que leur côté longitudinal s'étende longitudinalement ou transversalement sur les rails de support (1), et l'indication lumineuse des bandes lumineuses (10, 11) étant adaptée à la disposition respective des champs d'aspiration rectangulaires (6) du dispositif de serrage par aspiration (2) concerné.

6. Support de pièces à usiner selon la revendication 4 ou 5,
caractérisé en ce que
plusieurs sources de lumière ponctuelles (12) des bandes lumineuses (10, 11) sont prévues pour chacune des zones de positionnement (A, B, B1, B2) à indiquer pour les rails de support (1), les dispositifs de serrage par aspiration (2) ou leurs champs d'aspiration rectangulaires (6).

7. Support de pièces à usiner selon la revendication 5 ou 6,
caractérisé en ce que
la position des champs d'aspiration (6) couvrant la moitié de la surface fondamentale des dispositifs de serrage par aspiration (2) est indiquée avec une luminosité élevée, tandis que celle des champs vides (7) voisins, sur la surface du dispositif de serrage par aspiration (2), est indiquée avec une luminosité plus faible.

8. Support de pièces à usiner selon la revendication 7,
caractérisé en ce que
la luminosité plus élevée des sources de lumière ponctuelles (12) des bandes lumineuses (10, 11) est obtenue, dans la zone concernée (B1), du fait que chaque source lumineuse (12) de cette zone (B1) s'allume, et que la luminosité réduite est obtenue, dans la zone y relative (B2), du fait qu'une source de lumière (12) sur deux s'allument dans cette zone (B2).
